# EUROPEAN PATENT SPECIFICATION

(11) **EP 3 101 308 B1**
(45) Date of publication and mention of the grant of the patent: **02.01.2019**
(21) Application number: 15743686.6
(22) Date of filing: 15.01.2015
(51) Int. Cl.: F16F 9/05, F16F 1/40, F16F 9/54, F16F 9/04

(54) **AIR SPRING DEVICE AND METHOD FOR MANUFACTURING AIR SPRING DEVICE**
LUFTFEDERVORRICHTUNG UND VERFAHREN ZUR HERSTELLUNG DER LUFTFEDERVORRICHTUNG
DISPOSITIF À RESSORT PNEUMATIQUE ET PROCÉDÉ DE FABRICATION DE DISPOSITIF À RESSORT PNEUMATIQUE

(30) Priority: 28.01.2014 JP 2014013598
(43) Date of publication of application: 07.12.2016
(73) Proprietor: Bridgestone Corporation, Tokyo 104-8340 (JP)
(72) Inventor: TANAKA, Satoshi, Tokyo 104-8340 (JP)
(74) Representative: Oxley, Robin John George
(86) International application number: PCT/JP2015/050974
(87) International publication number: WO 2015/115198

(56) References cited:
- EP-A1- 1 041 308
- DE-U1- 29 510 199
- DE-U1-202008 013 805
- JP-A- H0 814 299
- JP-A- H0 893 822
- JP-A- S59 199 363
- JP-A- 2010 223 372

## Description

### Technical Field

The present invention relates to an air spring device and an air spring device manufacturing method.

### Background Art

JP-ANo. 2012-72825 discloses an air spring device in which an upper face plate and a lower face plate are airtightly coupled to each other by a tubular flexible diaphragm. Attention is also drawn to the disclosures of DE202008013805, EP1041308 and DE29510199.

### SUMMARY OF INVENTION

### Technical Problem

The air spring device pertaining to the conventional example described above is attached between a vehicle and a bogie in a railway vehicle, for example, and the upper face plate of the air spring device contacts an attachment surface of a vehicle undercarriage. In this case, the attachment surface of the vehicle undercarriage is configured in a flat plate shape, so the flatness of the upper face plate that contacts the attachment surface is formed high in correspondence thereto. By changing the shape of the upper face plate, the spring characteristics of the air spring can be adjusted in a certain range, but because the conventional upper face plate has a flat plate structure corresponding to the attachment surface of the vehicle undercarriage, the degree of freedom of the shape has been low.

In consideration of the above-described circumstances, it is an object of the present invention to enhance the degree of freedom of the shape of the upper face plate and control spring characteristics while ensuring the flatness of the upper face plate in an air spring device.

### Solution to Problem

An air spring device pertaining to a first aspect comprises: an air spring in which an upper face plate and a lower face plate are airtightly coupled to each other by a tubular flexible diaphragm; and ribs as projecting portions that rise from an upper surface of the upper face plate and have top portions that lie in the same plane as each other, wherein the tubular flexible diaphragm makes contact with a flat plate-shaped linear portion of the upper face plate, and outer side ends of the ribs in a radial direction of the upper face plate are positioned on the linear portion.

In this air spring device, the projecting portions disposed on the upper face plate have the top portions that lie in the same plane as each other, so the flatness of the upper face plate can be ensured. Furthermore, the top portions of the projecting portions function as contact sites with respect to an attachment surface, so the degree of freedom of the shape of the section of the upper face plate other than the projecting portions becomes higher. For this reason, the shape of the upper face plate can be changed to control the spring characteristics of the air spring.

[DELETED]

In this air spring device, the projecting portions are ribs, so the strength of the upper face plate can be improved while restraining an increase in the mass of the upper face plate.

A second aspect is the air spring device pertaining to the first aspect, wherein the ribs are formed in a radial configuration.

In this air spring device, the ribs are formed in a radial configuration, so the strength of the upper face plate with respect to bending deformation can be improved.

A third aspect is the air spring device pertaining to the second aspect, wherein the upper face plate has a sloping portion that slopes and extends from a peripheral edge portion of the linear portion toward a side of the lower face plate, and the ribs are formed ranging from the linear portion to the sloping portion.

In this air spring device, the ribs are formed ranging from the linear portion to the sloping portion, so the shape of the sloping portion can be changed to control the spring characteristics of the air spring while ensuring with the ribs the flatness of the upper face plate.

A fourth aspect is the air spring device pertaining to any one of the first to third aspects, wherein the projecting portions comprises an annular rib.

In this air spring device, the strength of the upper face plate can be improved by the annular rib.

A fifth aspect is the air spring device pertaining to the fourth aspect, wherein an annular recess portion serving as a securing portion for the tubular flexible diaphragm is formed at an undersurface side of the annular rib in the upper face plate.

In this air spring device, the annular recess portion serving as a securing portion for the tubular flexible diaphragm is formed at the undersurface side of the annular rib that rises from the upper surface of the upper face plate, so it is not necessary to make the upper face plate thicker in order to form the recess portion. For this reason, an increase in the thickness of the upper face plate can be restrained.

An air spring device manufacturing method pertaining to a sixth aspect comprises: forming, at an upper surface of an upper face plate, a raised portion rising from the upper surface; cutting the raised portion to form projecting portions having top portions that lie in the same plane; and airtightly coupling, with a tubular flexible diaphragm, the upper face plate and a lower face plate to each other to configure an air spring.

In this air spring device manufacturing method, rather than cutting the entire upper surface of the upper face plate to make it a flat surface, just the projecting portions are cut and it is ensured that the top portions thereof lie in the same plane, so material costs and processing costs can be restrained. Furthermore, the section other than the projecting portions is not cut, so the quality of the product can be stabilized.

### Advantageous Effects of Invention

According to the air spring device and the air spring device manufacturing method pertaining to the present invention, there are obtained the superior effects that the degree of freedom of the shape of the upper face plate can be enhanced and spring characteristics can be controlled while ensuring the flatness of the upper face plate.

### BRIEF DESCRIPTION OF DRAWINGS

FIG. 1 is a plan view showing an air spring device pertaining to a first embodiment.
FIG. 2 is an enlarged sectional view, seen from arrows 2-2 in FIG. 1, showing the air spring device pertaining to the first embodiment.
FIG. 3 is a sectional view, corresponding to FIG. 2, showing an air spring device pertaining to a second embodiment.
FIG. 4 is a plan view showing an air spring device pertaining to a third embodiment.
FIG. 5 is a half-sectional view showing an upper face plate and a tubular flexible diaphragm of the air spring device pertaining to the third embodiment.

### DESCRIPTION OF EMBODIMENTS

Embodiments of the present invention will be described below on the basis of the drawings.

### <Air Spring Device>

### [First Embodiment]

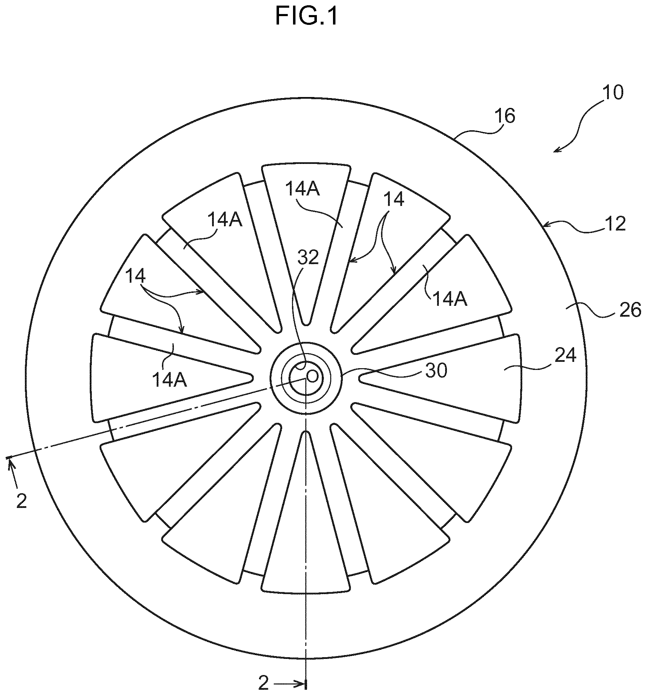

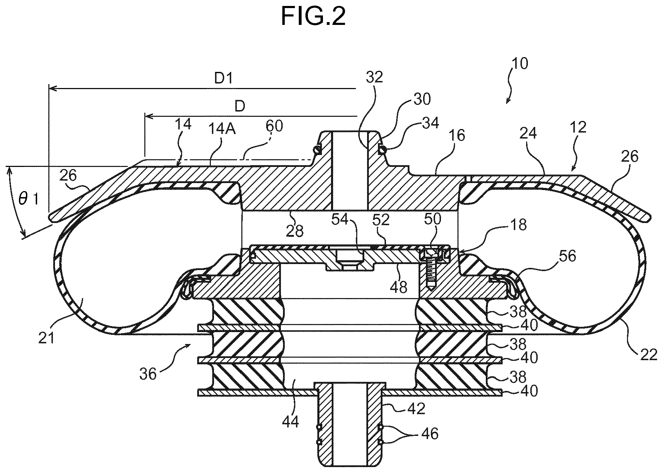

In FIG. 1 and FIG. 2, an air spring device 10 pertaining to the present embodiment has an air spring 12 and ribs 14 serving as an example of projecting portions, and the air spring device 10 is used by being attached between a vehicle body and a bogie of a railway vehicle not shown in the drawings.

The air spring 12 is formed as a result of an upper face plate 16 and a lower face plate 18 being airtightly coupled to each other by a tubular flexible diaphragm 22, and a gas is sealed in or appropriately supplied to an interior 21. The upper face plate 16 is formed in a substantially disc shape, for example, and has a flat plate-shaped linear portion 24, which is concentric with a center O of the upper face plate 16 (FIG. 1), and a sloping portion 26, which slopes and extends from the peripheral edge portion of the linear portion 24 toward a side of the lower face plate 18. The angle of the undersurface of the sloping portion 26 with respect to the horizontal direction (the planar direction of top portions 14A of the ribs 14) is θ1, for example. θ1 is 30°, for example. The tubular flexible diaphragm 22 makes contact ranging from the linear portion 24 to the sloping portion 26.

A thick-walled portion 28 that projects downward and a connecting portion 30 that projects upward are formed in the central portion of the linear portion 24. A through hole 32 that is communicated with the interior of the air spring 12 through the thick-walled portion 28 is formed in the connecting portion 30. The outer peripheral surface of the connecting portion 30 is formed in a tapered shape, for example, and an O-ring 34 is attached to that outer peripheral surface. The connecting portion 30 becomes connected to a pipe body or the like not shown in the drawings.

The ribs 14 rise from the upper surface of the upper face plate 16 and have top portions 14A that lie in the same plane as each other. As shown in FIG. 1, there are twelve ribs 14 evenly formed in a radial configuration from the center O of the upper face plate 16, for example. The outer side ends of the ribs 14 in the radial direction of the upper face plate 16 are positioned on the linear portion 24. In order for the top portions 14A to lie in the same plane, at least three ribs 14 are necessary and preferably eight or more. The top portions 14A of the ribs 14 are configured in flat plate shapes that lie in the same plane by cutting, for example.

The lower face plate 18 is formed in a substantially disc shape. As shown in FIG. 2, a tubular stacked elastic body 36 is disposed under the lower face plate 18. The stacked elastic body 36 is formed by alternately stacking elastic members 38, which are each formed in a ring shape and are made of rubber, for example, and stack plates 40, which have the same inner and outer diameters as the elastic members 38, are each similarly formed in a ring shape, and are made of metal. A pipe-shaped connecting portion 42 is attached in the central portion of the stack plates 40. The connecting portion 42 is communicated with an air chamber 44 inside the stacked elastic body 36. O-rings 46 are attached to the outer periphery of the connecting portion 42, and another pipe body (not shown in the drawings) can be connected.

A buffer plate 48 is attached to the upper surface of the lower face plate 18 using bolts 50, for example. A sliding member 52 is disposed on the top surface of the buffer plate 48. The sliding member 52 can reduce frictional resistance when the thick-walled portion 28 of the upper face plate 16 contacts the buffer plate 48 and slides in the horizontal direction. A through hole 54 is formed in the buffer plate 48. Because of this through hole 54, the inside of the air spring 12 and the air chamber 44 of the stacked elastic body 36 are communicated with each other.

A looped member 56 for protecting the tubular flexible diaphragm 22 is attached to the outer periphery of the lower face plate 18. The looped member 56 is formed by adhering, to a metal frame that fits together with the lower face plate 18, an elastic body that contacts the tubular flexible diaphragm 22.

### (Action)

The present embodiment is configured as described above, and the action thereof will be described below. In FIG. 1, the stacked elastic body 36 of the air spring device 10 pertaining to the present embodiment is secured to a bogie of a railway vehicle (not shown in the drawings). A flat plate-shaped attachment surface is disposed on the bottom surface of the vehicle body of the railway vehicle (not shown in the drawings). The top portions 14A of the ribs 14 of the upper face plate 16 contact this attachment surface, so that the upper face plate 16 evenly contacts the attachment surface.

In this air spring device 10, the ribs 14 disposed on the upper face plate 16 have the top portions 14A that lie in the same plane as each other, so the flatness of the upper face plate 16 can be ensured. Furthermore, the top portions 14A of the ribs 14 function as contact sites with respect to the attachment surface, so the degree of freedom of the shape of the section of the upper face plate 16 other than the ribs 14 becomes higher. Furthermore, by disposing the ribs 14 on the upper face plate 16, the strength of the upper face plate 16 can be improved while restraining an increase in the mass of the upper face plate 16. In particular, the ribs 14 are placed in a radial configuration from the center O of the upper face plate 16, so the strength of the upper face plate 16 with respect to bending deforming can be improved.

In this way, according to the present embodiment, the shape of the upper face plate 16 can be changed to control the spring characteristics of the air spring 12 while ensuring the flatness of the upper face plate 16.

### [Second Embodiment]

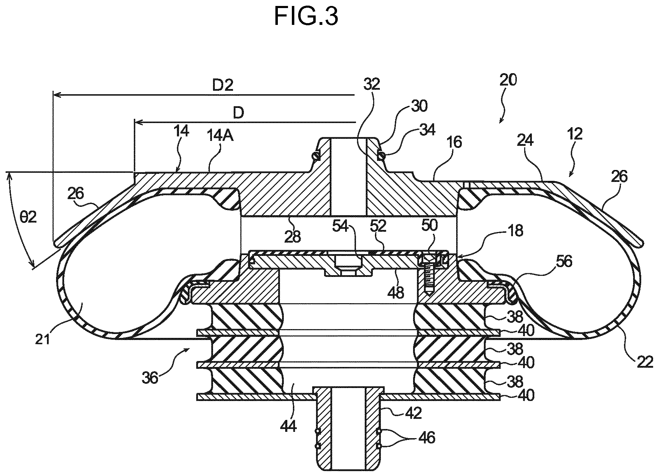

In FIG. 3, in an air spring device 20 pertaining to the present embodiment, in the upper face plate 16 an angle θ2 of the undersurface of the sloping portion 26 with respect to the horizontal direction (the planar direction of the top portions 14A of the ribs 14) is set larger than the angle θ1 in the first embodiment, and is 45°, for example. In accompaniment with this, an outer diameter D2 of the upper face plate 16 is smaller than an outer diameter D1 in the first embodiment (FIG. 2).

In order to ensure that the lengths of the ribs 14 (the areas of the top portions 14A of the ribs 14) of the upper face plate 16 are the same as in the first embodiment, the ribs 14 are formed ranging from the linear portion 24 to the sloping portion 26 of the upper face plate 16. A diameter D of the positions of the outer side ends of the ribs 14 using the center O of the upper face plate 16 as a reference is equal to what it is in the first embodiment.

In the present embodiment, the ribs 14 are formed ranging from the linear portion 24 to the sloping portion 26, so the shape of the sloping portion 26 can be changed to control the spring characteristics of the air spring 12 while ensuring the flatness of the upper face plate 16, that is, the area of the top portions 14A. Specifically, by changing the shape of the sloping portion 26 of the upper face plate 16 as described above, the spring characteristics of the air spring 12 can made harder mainly in the horizontal direction. In this way, the shape of the section of the upper face plate 16 other than the ribs 14 can be appropriately changed provided that the flatness of the upper face plate 16 resulting from the ribs 14 is ensured.

Other sections are the same as those in the first embodiment, so the same reference signs are assigned in the drawings to the same sections, and description is omitted.

### [Third Embodiment]

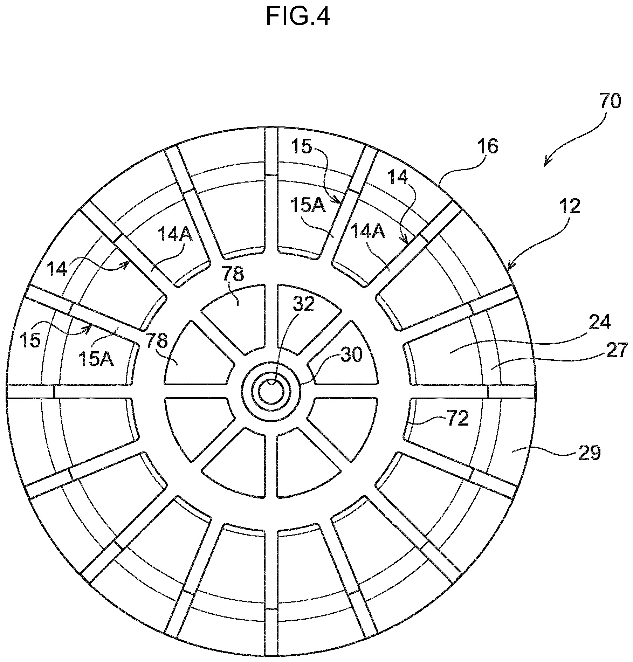

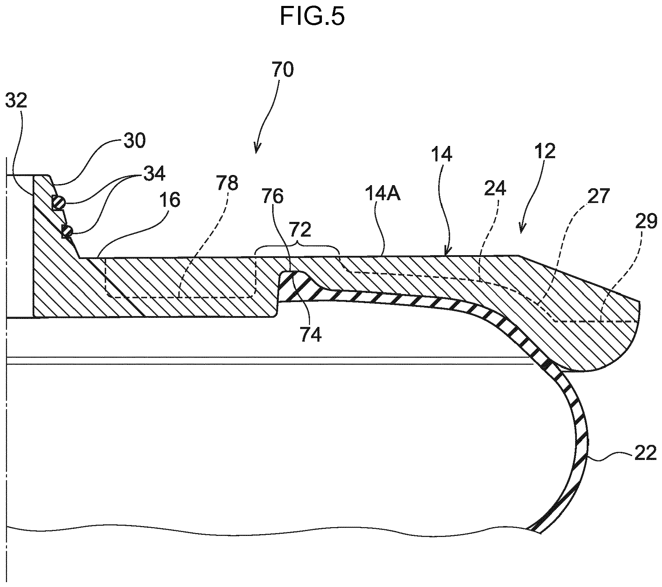

In FIG. 4 and FIG. 5, an air spring device 70 pertaining to the present embodiment has an annular rib 72 serving as a projecting portion on the upper face plate 16, and an annular recess portion 74 serving as a securing portion for the tubular flexible diaphragm 22 is formed at the undersurface side of the annular rib 72. A bead portion 76 on the upper side of the tubular flexible diaphragm 22 is secured to the annular recess portion 74. An annular bead core (not shown in the drawings) is embedded in the bead portion 76.

As shown in FIG. 4, in addition to the annular rib 72 and the ribs 14 that extend in a radial configuration on the radial direction inner side and outer side of the annular rib 72, ribs 15 that extend in a radial configuration only on the radial direction outer side of the annular rib 72 are formed on the upper face plate 16. The ribs 14 and 15 are alternately formed in the circumferential direction of the upper face plate 16. Top portions 15A of the ribs 15 lie in the same plane as the top portions 14A of the ribs 14. Regions enclosed by the ribs 14 adjacent to each other in the circumferential direction of the upper face plate 16 and the annular rib 72 are recess portions 78 for weight reduction.

As shown in FIG. 5, the linear portion 24 gently slopes downward heading outward in the radial direction of the upper face plate 16. A curved portion 27 that becomes upwardly convex is formed on the radial direction outer side of the linear portion 24. A brim portion 29 is formed on the radial direction outer side of the curved portion 27. The upper surface side of the brim portion 29 is flatly formed. The undersurface side of the brim portion 29 is a circular arc surface that becomes downwardly convex in order to allow the tubular flexible diaphragm 22 to become smoothly deformed. It should be noted that the sloping portion 26 (FIG. 2) may also be formed instead of the curved portion 27.

The ribs 14 are formed as far as the outer edge of the upper face plate 16. Two O-rings 34 are attached to the outer peripheral surface of the connecting portion 30 disposed in the central portion of the upper face plate 16. The lower face plate 18 and the stacked elastic body 36 are attached like in the first embodiment to the underside of the tubular flexible diaphragm 22 (not shown in the drawings).

In this air spring device 70, the strength of the upper face plate 16 can be improved by the annular rib 72 that rises from the upper surface of the upper face plate 16. Furthermore, the annular recess portion 74 serving as a securing portion for the tubular flexible diaphragm 22 is formed at the undersurface side of the annular rib 72, so it is not necessary to make the thickness of the upper face plate 16 thicker overall in order to form the recess portion 74. For this reason, an increase in the thickness of the upper face plate 16 can be restrained.

Furthermore, by combining the ribs 14 placed in a radial configuration and the annular rib 72, the strength and rigidity of the upper face plate 16 with respect to bending deformation can be enhanced. In particular, because the ribs 14 are formed as far as the outer edge of the upper face plate 16, the strength and rigidity of the upper face plate 16 with respect to bending deformation become higher.

Other sections are the same as those in the first embodiment, so the same reference signs are assigned in the drawings to the same sections, and description is omitted.

### <Air Spring Device Manufacturing Method>

In FIG. 2, an air spring device manufacturing method has: forming, at the upper surface of the upper face plate 16, a raised portion 60 rising from the upper surface; cutting the raised portion 60 to form the ribs 14 (projecting portions) having the top portions 14A that lie in the same plane; and airtightly coupling, with the tubular flexible diaphragm 22, the upper face plate 16 and the lower face plate 18 to each other to configure the air spring 12.

In this air spring device manufacturing method, rather than cutting the entire upper surface of the upper face plate 16 to make it a flat surface, just the raised portion 60 is cut to form the ribs 14 and it is ensured that the top portions 14A thereof lie in the same plane, so material costs and processing costs can be restrained. Furthermore, the section other than the ribs 14 is not cut, so the quality of the product can be stabilized. Moreover, from the ribs 14 to the connecting portion 30 can be cut in one step.

### [Other Embodiments]

The ribs 14 have been given as an example of the projecting portions on the upper surface of the upper face plate 16, but the projecting portions are not limited to this and may also be various types of continuously or intermittently disposed projections or projecting portions distributed as points. The ribs 14 (the projecting portions) are not limited to being integrated with the upper face plate 16 and may also be separate.

The ribs 14 were formed in a radial configuration, but the placement of the ribs 14 is not limited to this and the ribs 14 may also be placed in a grid configuration, a concentric circle configuration, a bent line configuration, or a curved line configuration. The top portions 14A of the ribs 14 are not limited to lying in a single plane and may also lie in plural planes. Specifically, the top portions 14A may also be formed in a stepped configuration.

Sections other than the air spring 12 and the ribs 14 (the projecting portions), such as the buffer plate 48, the stacked elastic body 36, and the looped member 56, are not limited to the configurations shown in the drawings and can be appropriately changed.

Examples of embodiments of the present invention have been described above, but the embodiments of the present invention are not limited to what is described above and can of course be modified and implemented in a variety of ways in addition to what is described above without departing from the spirit thereof.

The disclosure of Japanese Patent Application No. 2014-13598 filed on January 28, 2014 is incorporated in its entirety by reference herein.

All documents, patent applications, and technical standards mentioned in this specification are incorporated by reference herein to the same extent as if each individual document, patent application, or technical standard were specifically and individually indicated to be incorporated by reference.

## Claims

1. An air spring device (10, 20, 70), comprising:
an air spring (12) in which an upper face plate (16) and a lower face plate (18) are airtightly coupled to each other by a tubular flexible diaphragm (22); and
ribs (14) as projecting portions that rise from an upper surface of the upper face plate (16) and have top portions (14A) that lie in the same plane as each other, wherein
the tubular flexible diaphragm (22) makes contact with a flat plate-shaped linear portion (24) of the upper face plate (16), and
outer side ends of the ribs (14) in a radial direction of the upper face plate (16) are positioned on the linear portion (24).

2. The air spring device (10, 20, 70) according to claim 1, wherein the ribs (14) are formed in a radial configuration.

3. The air spring device (10, 20, 70) according to claim 2, wherein:
the upper face plate (16) has a sloping portion (26) that slopes and extends from a peripheral edge portion of the linear portion (24) toward a side of the lower face plate (18), and
the ribs (14) are formed ranging from the linear portion (24) to the sloping portion (26).

4. The air spring device (10, 20, 70) according to any one of claim 1 to claim 3, wherein the projecting portions comprise an annular rib (72).

5. The air spring device (10, 20, 70) according to claim 4, wherein an annular recess portion (74) serving as a securing portion for the tubular flexible diaphragm (22) is formed at an undersurface side of the annular rib (72) in the upper face plate (16).

6. An air spring device (10, 20, 70) manufacturing method, comprising:
forming, at an upper surface of an upper face plate (16), a raised portion rising from the upper surface;
cutting the raised portion to form projecting portions having top portions (14A) that lie in the same plane; and
airtightly coupling, with a tubular flexible diaphragm (22), the upper face plate (16) and a lower face plate (18) to each other to configure an air spring (12).

## Patentansprüche

1. Luftfedervorrichtung (10, 20, 70), die Folgendes umfasst:
eine Luftfeder (12), in der eine obere Abdeckung (16) und eine untere Abdeckung (18) durch eine röhrenförmige flexible Membran (22) luftdicht miteinander verbunden sind, und
Rippen (14) als vorspringende Abschnitte, die sich von einer oberen Fläche der oberen Abdeckung (16) erheben und obere Abschnitte (14A) aufweisen, die in der gleichen Ebene miteinander liegen, wobei
die röhrenförmige flexible Membran (22) eine Berührung mit einem flachen plattenförmigen linearen Abschnitt (24) der oberen Abdeckung (16) herstellt und
äußere Seitenenden der Rippen (14) in einer Radialrichtung der oberen Abdeckung (16) auf dem linearen Abschnitt (24) angeordnet sind.

2. Luftfedervorrichtung (10, 20, 70) nach Anspruch 1, wobei die Rippen (14) in einer radialen Konfiguration geformt sind.

3. Luftfedervorrichtung (10, 20, 70) nach Anspruch 2, wobei:
die obere Abdeckung (16) einen abfallenden Abschnitt (26) aufweist, der von einem Umfangskantenabschnitt des linearen Abschnitts (24) abfällt und sich zu einer Seite der unteren Abdeckung (18) hin erstreckt, und
die Rippen (14) so geformt sind, dass sie von dem linearen Abschnitt (24) zu dem abfallenden Abschnitt (26) reichen.

4. Luftfedervorrichtung (10, 20, 70) nach einem der Ansprüche 1 bis 3, wobei die vorspringenden Abschnitte eine ringförmige Rippe (72) umfassen.

5. Luftfedervorrichtung (10, 20, 70) nach Anspruch 4, wobei ein ringförmiger Aussparungsabschnitt (74), der als ein Befestigungsabschnitt für die röhrenförmige flexible Membran (22) dient, an einer Unterflächenseite der ringförmigen Rippe (72) in der oberen Abdeckung (16) geformt ist.

6. Herstellungsverfahren für eine Luftfedervorrichtung (10, 20, 70), das Folgendes umfasst:
Formen, an einer oberen Fläche einer oberen Abdeckung (16), eines erhöhten Abschnitts, der sich von der oberen Fläche erhebt,
Schneiden des erhöhten Abschnitts, um vorspringende Abschnitte zu formen, die obere Abschnitte (14A) aufweisen, die in der gleichen Ebene liegen, und
luftdichtes Verbinden, mit einer röhrenförmigen flexiblen Membran (22), der oberen Abdeckung (16) und einer unteren Abdeckung (18) miteinander, um eine Luftfeder (12) zu konfigurieren.

## Revendications

1. Dispositif à ressort pneumatique (10, 20, 70), comprenant :
un ressort pneumatique (12) dans lequel une plaque de face supérieure (16) et une plaque de face inférieure (18) sont accouplées de manière étanche à l'air l'une à l'autre par un diaphragme tubulaire flexible (22) ; et
des nervures (14) constituant des parties en saillie remontant d'une surface supérieure de la plaque de face supérieure (16) et comportant des parties supérieures (14A) situées dans le même plan l'une par rapport à l'autre ; dans lequel :
le diaphragme tubulaire flexible (22) entre en contact avec une partie linéaire en forme de plaque plate (24) de la plaque de face supérieure (16) ; et
des extrémités latérales externes des nervures (14), dans une direction radiale de la plaque de face supérieure (16), sont positionnées dans la partie linéaire (24).

2. Dispositif à ressort pneumatique (10, 20, 70) selon la revendication 1, dans lequel les nervures (14) sont formées dans une configuration radiale.

3. Dispositif à ressort pneumatique (10, 20, 70) selon la revendication 2, dans lequel :
la plaque de face supérieure (16) comporte une partie inclinée (26), inclinée par rapport à une partie de bordure périphérique de la partie linéaire (24) et s'étendant de celle-ci vers un côté de la plaque de face inférieure (18) ; et
les nervures (14) sont formées dans l'intervalle allant de la partie linéaire (24) vers la partie inclinée (26).

4. Dispositif à ressort pneumatique (10, 20, 70) selon l'une quelconque des revendications 1 à 3, dans lequel les parties en saillie comprennent une nervure annulaire (72).

5. Dispositif à ressort pneumatique (10, 20, 70) selon la revendication 4, dans lequel une partie d'évidement annulaire (74), servant de partie de fixation pour le diaphragme tubulaire flexible (22), est formée au niveau d'une surface inférieure de la rainure annulaire (72) dans la plaque de face supérieure (16).

6. Dispositif à ressort pneumatique (10, 20, 70), comprenant les étapes ci-dessous :
formation, au niveau d'une surface supérieure d'une plaque de face supérieure (16), d'une partie surélevée remontant de la surface supérieure ;
découpe de la partie surélevée pour former des parties en saillie, comportant des parties supérieures (14A) situées dans le même plan ; et
accouplement de manière étanche à l'air, par l'intermédiaire d'un diaphragme tubulaire flexible (22), de la plaque de face supérieure (16) et d'une plaque de face inférieure (18) l'une à l'autre pour configurer un ressort pneumatique (12).
